# FASCICULE DE BREVET EUROPEEN

(11) **EP 0 524 091 B1**
(45) Date de publication et mention de la délivrance du brevet: **27.09.1995**
(21) Numéro de dépôt: 92402043.1
(22) Date de dépôt: 15.07.1992
(51) Int. Cl.: E05D 13/00, F16B 19/00

(54) **Dispositif anti-déchaussement pour vantail coulissant, notamment de porte, fenêtre ou analogue**
Aushebevorbeugungsvorrichtung für Schiebeflügel, insbesondere einer Tür, eines Fensters oder ähnlichem
Anti-disengagement device for sliding wing, especially of a door, window or similar

(30) Priorité: 19.07.1991 FR 9109192
(43) Date de publication de la demande: 20.01.1993
(73) Titulaire: ALCAN FRANCE, F-31037 Toulouse Cedex (FR)
(72) Inventeur: Bastian, Marc, F-31100 Toulouse (FR); Mendez, Serge, F-31120 Roquettes (FR)
(74) Mandataire: Desaix, Anne

(56) Documents cités:
- US-A- 3 304 658
- US-A- 4 840 523

## Description

La présente invention est relative à vantail coulissant selon le préambule de le revendication 1, comportant un dispositif anti-déchaussement destiné à empêcher que ce vantail monté à coulissement dans un châssis de support fixe, en particulier pour porte, fenêtre ou analogue, ne puisse sortir ou se déboîter accidentellement ou encore lors d'une manoeuvre d'effraction, vis-à-vis des rails qui assurent en parties haute et/ou basse de ce châssis, par engagement dans des rainures de profilés appartenant au vantail, le guidage en translation de celui-ci dans ce châssis.

On sait que, dans la technique la plus classique de réalisation de tels vantaux coulissants, par exemple selon le US-A-3.304.658. il est nécessaire de prévoir dans les côtés haut et bas de la feuillure du châssis qui reçoit le vantail, des éléments en saillie vers l'intérieur, formant rails, rapportés ou venus de fabrication avec le châssis, et qui s'étendent parallèlement à des profilés d'encadrement du vantail formant les côtés correspondants de celui-ci, ces rails étant prévus pour s'engager par emboîtement dans des gorges en U délimitées par des rainures de profondeurs différentes, ménagées dans les profilés du vantail. Notamment, la hauteur de ces gorges est suffisante pour que l'on puisse dans un premier temps, engager le rail prévu dans la partie haute du châssis dans la gorge correspondante dont la profondeur est calculée pour que le côté opposé du vantail puisse être amené à l'aplomb de l'autre rail disposé dans la partie basse du châssis, le vantail étant alors légèrement abaissé afin que la gorge réalisée dans son profilé inférieur engage le rail en regard sur une hauteur égale au déplacement autorisé de la gorge opposée vis-à-vis du rail supérieur. Du fait que cette dernière à une profondeur supérieure à celle de la gorge de la rainure recevant le rail inférieur, le vantail est immobilisé vis-a-vis du châssis, sans toutefois empêcher son déplacement en translation latérale par coulissement sur lesdits rails, grâce notamment à des roulettes ou galets usuellement montés dans le fond de ces gorges.

On conçoit toutefois que par une suite d'opérations inverse, le vantail puisse être sorti de son châssis dans autre difficulté. Dans ces conditions, afin d'éviter un déboîtement non voulu du vantail, résultant notamment du simple soulèvement de celui-ci permettant l'échappement de l'une puis de l'autre gorge vis-à-vis des rails correspondants, en particulier en cas de tentative d'effraction du local comportant la porte ou fenêtre munie d'un tel vantail coulissant, il est connu d'adapter sur les bords des gorges prévues dans les profilés supérieur et inférieur du vantail, en particulier sur les côtés latéraux de celui-ci, des pièces rapportées qui limitent la profondeur libre de la gorge correspondante, notamment à la partie supérieure du vantail, en empêchant dès lors le soulèvement de celui-ci vers le haut, du moins sur une hauteur telle que la gorge opposée puisse échapper à son rail, en l'espèce au rail inférieur du châssis.

Le jeu libre pour le déplacement vers le haut du vantail est donc ainsi réduit, ce qui évite toute possibilité de déchaussement vis-à-vis des rails du châssis des profilés en parties haute et basse du vantail, sans pour autant limiter sa faculté de coulisser sur ces rails.

Dans ce but, on a déjà prévu de réaliser, pour réduire la profondeur des gorges des rainures du vantail, des pièces d'arrêt venant se rapporter sur le côté de ce dernier, au droit des extrémités de ces gorges, ces pièces étant fixées sur le vantail par un effet de clip ou par vissage, ce montage permettant à ces pièces de se dissimuler dans la feuillure du châssis lorsque le vantail est fermé, en étant alors inaccessibles à un intrus.

La solution à clip offre une rapidité appréciable de mise en place de ces pièces sur des fenêtres ou ouvertures d'accès difficile ou dangereux, par exemple sur des fenêtres d'immeubles de grande hauteur ; en revanche, elle ne procure pas une fiabilité excellente du montage, du fait notamment du risque de leur facile éjection en cas de frottement, ou bien lors de manipulations intervenant à l'occasion du nettoyage des vantaux. Par ailleurs, il est exclu qu'une telle solution à clip conduise à la mise en place d'une pièce d'arrêt qui serait ensuite inamovible vis-à-vis du vantail, l'enlèvement volontaire de ces pièces devant toujours rester possible lorsque le vantail n'est pas en position fermée et les pièces correspondantes dissimulées dans la feuillure du châssis, afin de permettre un entretien mécanique de ce dernier ou du vantail, ou encore leur remplacement, exigeant leur démontage.

La solution par vissage apporte une meilleure tenue des pièces réduisant l'ouverture des gorges mais nécessite un temps de montage qui est parfois long et difficile, notamment si l'on considère qu'un châssis comporte ordinairement deux vantaux coulissants et par suite exige le montage de quatre, voire huit pièces du genre précité. En outre, pour des vantaux de grandes dimensions, notamment de hauteur importante, supérieure à 2 m, le vissage des pièces d'arrêt en partie haute de ces vantaux n'est pas toujours commode.

La présente invention vise un vantail coulissant muni d'un dispositif du genre mentionné ci-dessus, tel notamment que défini dans le préambule de la revendication principale annexée, utilisant une solution à clip, donc procurant une faculté de montage sur les côtés latéraux des vantaux particulièrement facile a mettre en oeuvre mais qui aille à cette dernière des possibilités d'immobilisation et/ou de démontage simples et efficaces, n'exigeant en particulier, pour l'enlèvement de la pièce, qu'une manoeuvre rapide et aisée.

A cet effet, le vantail muni du dispositif considéré se caractérise en ce qu'il est constitué par une pièce de support, munie de deux bras parallèles et symétriques présentant une élasticité en flexion vis-à-vis de la pièce et propres à pénétrer à l'intérieur de la gorge d'une des rainures ménagée dans un profilé du vantail, prévue pour recevoir un des rails de guidage de celui-ci solidarisé du châssis, de manière à engager un taion de blocage en saillie vers l'extérieur et porté par chaque bras derrière le bord du profilé à la manière d'un clip, la pièce de support comportant entre ses bras un embout muni d'un logement axial pour le montage d'un pion coulissant dans ce logement, ce pion étant terminé par une tête formant poussoir d'immobilisation de la pièce de support par appui de cette tête, à l'extérieur de l'embout, sur des ailes en retour vers l'intérieur de la gorge, portées par les bras de cette pièce à l'opposé des talons de blocage.

Selon l'invention, la pièce de support munie de ses bras flexibles peut être très facilement mise en place dans la gorge d'une rainure à obturer partiellement pour en limiter la hauteur, de telle sorte que, lorsque la pièce est de préférence en appui contre le profilé dans lequel est ménagée cette rainure, les talons des bras s'engagent derrière le bord du profilé en solidarisant automatiquement la pièce avec celui-ci. Dans cette position les bras peuvent être bloqués grâce à la tête du pion coulissant convenablement poussée dans le logement de l'embout, de telle sorte qu'elle vienne au contact des ailes en immobilisant les talons des bras derrière le profilé.

Avantageusement, la pièce de support est réalisée par moulage d'un matériau plastique, les bras flexibles étant venus de fabrication avec la pièce.

De préférence également, la tête du pion comporte des creux en regard, aptes à recevoir les extrémités des ailes latérales des bras en position d'immobilisation des talons de blocage.

Selon une autre caractéristique, le pion coulissant comprend, en arrière de sa tête et en regard de chacun des bras, des évidements médians tel qu'un effort de poussée complémentaire sur le pion dans son logement, fasse échapper la tête vis-à-vis des ailes latérales, en provoquant leur engagement dans l'évidement, de manière à libérer les talons de blocage et à autoriser l'enlèvement de la pièce de support.

Selon encore une autre caractéristique, le pion coulissant comporte un épaulement, apte à venir en appui contre une butée interne de fin de course prévue dans le logement de l'embout, notamment lorsque les ailes latérales s'engagent dans les évidements médians pour libérer les talons de blocage des bras.

Dans un mode de réalisation préféré de l'invention, la pièce de support comporte un corps à section sensiblement rectangulaire, présentant latéralement une échancrure pour le passage du rail de guidage du vantail et un bord d'appui sur le profilé recevant les bras, l'embout muni de son logement axial étant disposé sous le bord inférieur de cette échancrure dans le plan médian dudit rail.

D'autres caractéristiques d'un dispositif anti-dégondage, notamment pour vantail coulissant de porte, fenêtre ou analogue, apparaîtront encore à travers la description qui suit, d'un exemple de réalisation, donné à titre indicatif et non limitatif, en référence aux dessins annexés sur lesquels :
- La Figure 1 est une vue schématique en perspective d'un châssis muni d'un vantail coulissant, sur lequel sont montés des dispositifs anti-dégondage selon l'invention.
- La Figure 2 est un schéma de principe, illustrant en coupe transversale à plus grande échelle, le processus mis en oeuvre pour la mise en place du vantail dans son châssis, puis pour le montage sur ce vantail du dispositif considéré.
- La Figure 3 est une vue en perspective partielle, à encore plus grande échelle, d'une partie du châssis et de son vantail après montage du dispositif selon l'invention dans une des gorges de coulissement de ce vantail.
- La Figure 4 est une vue en perspective du dispositif de dégondage à échelle encore supérieure, illustrant les diverses parties de la pièce de support et du pion coulissant assurant son verrouillage.
- Les Figures 5, 6 et 7 sont des vues en coupe transversales du dispositif selon l'invention, correspondant respectivement à la mise en place à la manière d'un clip de la pièce de support du dispositif sur le profilé du vantail dans une rainure de coulissement de celui-ci, à la même pièce de support en position de blocage vis-à-vis du profilé au moyen du pion et enfin à la position de ce dernier dans laquelle la pièce est libérée du profilé.

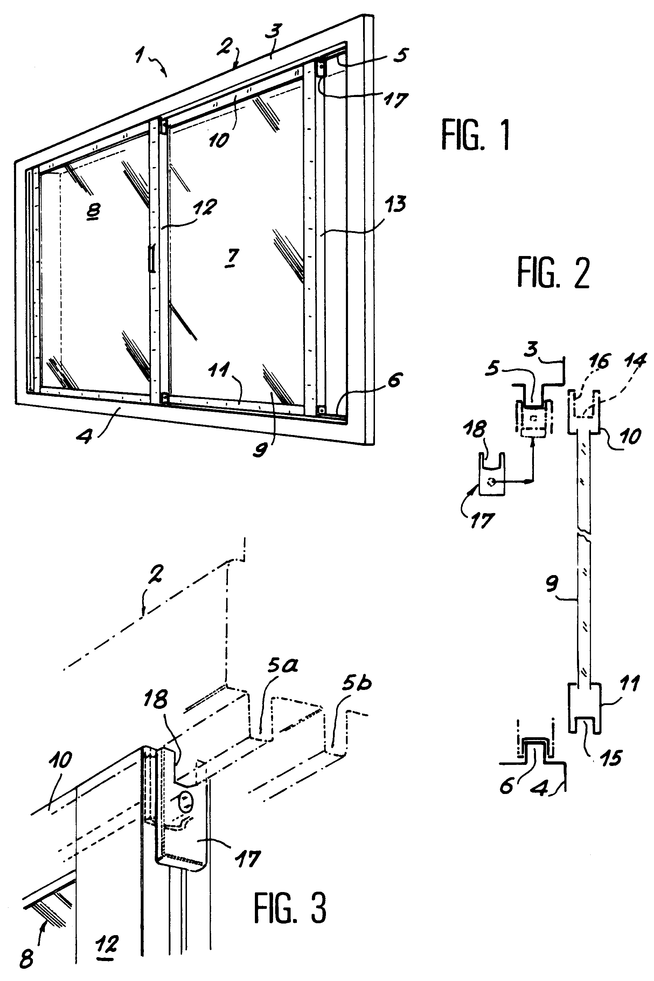

Sur la Figure 1, la référence 1 désigne une porte ou fenêtre à vantaux coulissants, aptes à être munis d'un dispositif anti-déchaussement selon l'invention, pour permettre notamment d'éviter le déboîtement ou le déchaussement involontaire ou non autorisé de ces vantaux.

La porte 1 comporte un châssis 2, de forme générale rectangulaire, constitué d'un encadrement métallique dont les côtés supérieur et inférieur 3 et 4, qui s'étendent horizontalement, présentent, vers l'intérieur de la feuillure formée par cet encadrement, des rails de guidage respectivement 5 et 6.

Dans le châssis 2 sont disposés des vantaux coulissants 7 et 8, constitué chacun dans l'exemple de réalisation représenté, d'une surface vitrée 9 entourée par un cadre formé de profilés 10 et 11 aux extrémités supérieures de chaque vantail, ces profilés horizontaux étant réunis de chaque côté par des profilés verticaux, respectivement 12 et 13.

Les profilés 10 à 13, qui encadrent ainsi la surface vitrée 9 du vantail, présentent au droit des rails 5 et 6 des rainures ouvertes, respectivement 14 à la partie supérieure du vantail, dans le profilé horizontal 10 et les extrémités hautes des profilés verticaux 12 et 13, et 15 dans le profilé inférieur 11 et les extrémités basses de ces deux mêmes profilés verticaux 12 et 13, afin d'accommoder les rails 5 et 6 du châssis 2 et d'autoriser de façon classique le coulissement du vantail correspondant. Avantageusement, les rainures des deux vantaux 7 et 8 comportent des roulettes ou galets de glissement (non représentés) logés dans le fond de ces rainures et portant sur les rails qui y pénètrent.

En pratique et comme l'illustre plus clairement la Figure 3, le châssis 2 comporte dans chacun de ses côtés supérieur et inférieur 3 et 4 deux rails parallèles pour le coulissement l'un contre l'autre des deux vantaux 7 et 8, la Figure 3 faisant seulement apparaître les rails correspondants prévus dans le côté supérieur 3, repérés par les références 5a et 5b, le rail 5a étant dévolu au vantail 8 par exemple et le rail 5b au vantail 7 ou vice versa.

De façon classique dans la technique et comme l'illustre schématiquement la Figure 2, la rainure 14 prévue dans les profilés de chaque vantail à sa partie supérieure présente une profondeur sensiblement supérieure à celle de la rainure 15 ménagée dans les profilés de la partie inférieure de ce même vantail afin de permettre le montage de ce dernier à l'intérieur du châssis 2. A cet effet, le mode opératoire consiste à engager le rail 5 jusqu'au fond de la rainure 14 la plus profonde, le vantail étant présenté sensiblement verticalement, de telle sorte que la rainure 15 puisse être amenée à l'aplomb du rail 6. Dans cette position, le vantail peut être légèrement descendu sur ce dernier rail, en étant coiffé par la rainure 15, sans que pour autant le rail opposé 5 échappe à sa propre rainure 14 du fait des différences de hauteur de ces deux rainures.

Une fois le vantail ainsi mis en place dans son châssis, la gorge 16 de la rainure 14, en particulier aux extrémités de celle-ci dans les profilés verticaux 12 et 13 est partiellement obturée par une pièce d'arrêt 17, venant s'adapter dans cette gorge comme le montre plus particulièrement les Figures 2 et 3, la pièce 17 comportant une échancrure 18 pour la passage du rail 5 correspondant, de manière à permettre le libre coulissement du vantail tout en évitant que ce dernier ne puisse alors être soulevé et en particulier être déboîté, notamment lors d'une tentative d'effraction, voire même à l'occasion d'une fausse manoeuvre involontaire.

En règle générale, les pièces d'arrêt 17 sont seulement montées aux extrémités supérieures des vantaux coulissants dans les gorges 16 des rainures 14 les plus profondes. Il va néanmoins de soi que des pièces analogues pourraient être aussi mises en place dans les gorges homologues des rainures 15 à la partie inférieure des vantaux, chaque vantail étant ainsi muni de quatre pièces d'arrêt et le châssis d'un total de huit pièces.

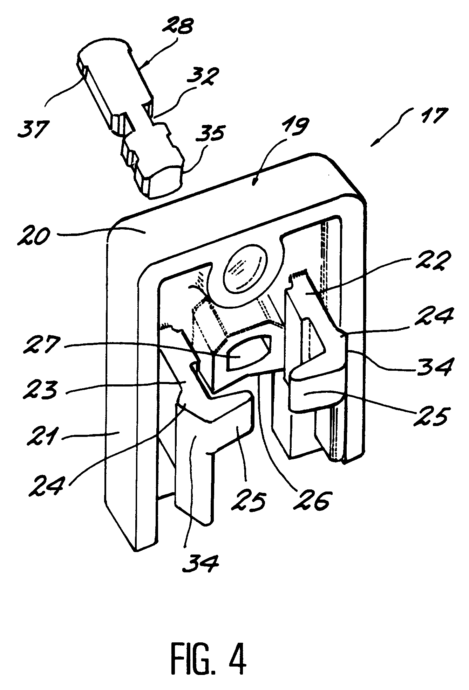

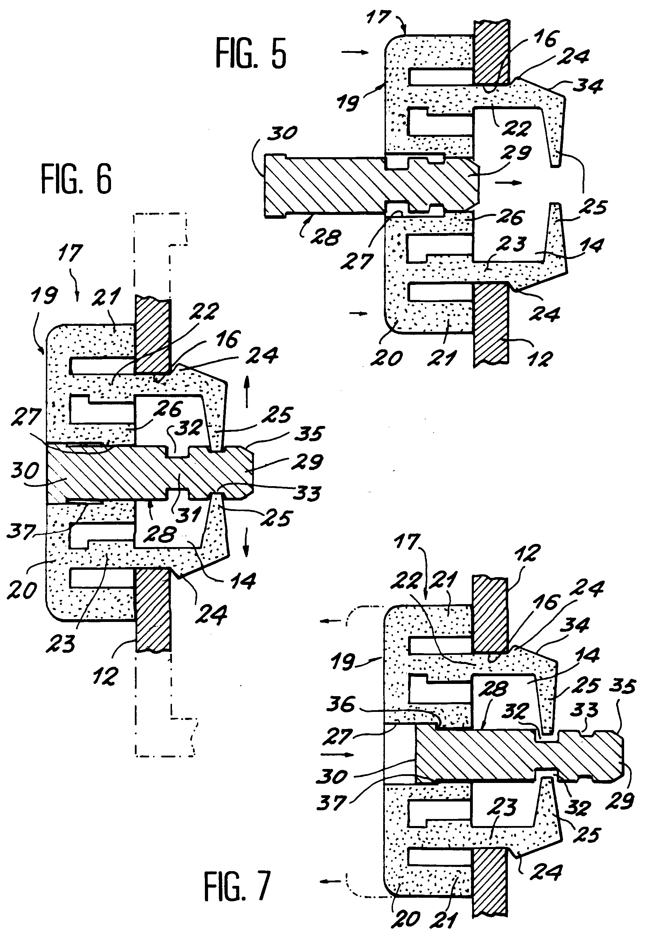

Les vues en perspective de la Figure 4 d'une part, en coupe des Figures 5, 6 et 7 d'autre part, illustrent la structure de la pièce d'arrêt 17 réalisée conformément à l'invention et permettent d'expliciter son montage et son fonctionnement.

Cette pièce 17 comporte un corps 19 constitué d'un fond 20 et d'un rebord 21 prévu pour venir s'appliquer contre la face en regard du profilé vertical, par exemple du profilé 12, contre lequel elle s'appuie lorsqu'elle est mise en place dans la gorge 16 de la rainure correspondante.

Le corps 19 est de préférence réalisé par moulage d'une matière plastique et présente un profil général de forme rectangulaire comme l'illustre notamment la Figure 4.

Selon l'invention, le fond 20 de la pièce 17 est solidarisé de deux bras, respectivement 22 et 23, qui s'étendent perpendiculairement au plan de ce fond et qui, de préférence, sont venus de moulage avec la pièce 17. Ces bras 22 et 23 présentent une dimension longitudinale sensiblement supérieure à celle du rebord 21 et dépassent ainsi l'extrémité de ce dernier qui s'appuie contre le profilé 12, de manière à pouvoir s'engager à l'intérieur de la gorge 16 dans la rainure correspondante, à savoir la rainure supérieure 14 dans les vues des Figures 5 à 7 notamment.

Chacun des bras 22 ou 23 comporte une partie en saillie vers l'extérieur formant talon 24 et, au-delà de ce dernier, une aile 25 dirigée vers l'intérieur de la pièce, les talons 24 des deux bras, de même que leurs ailes 25, étant disposés respectivement en regard de la façon illustrée sur les dessins. Les deux bras sont symétriques l'un de l'autre par rapport à un plan médian (non figuré) de la pièce 17, qui coîncide notamment avec celui du rail 5 engagé dans la rainure 14 correspondante.

La pièce 17 comporte par ailleurs, sensiblement en son centre, un embout 26, solidarisé du fond 20 et présentant un logement interne 27 dans lequel est introduit un pion 28 dont le profil externe est complémentaire du profil interne de ce logement. Le pion 28 peut ainsi librement coulisser dans ce logement sous l'effet d'un outil approprié, du genre poinçon ou autre, ici non représenté.

Le pion 28 comporte à sa partie antérieure qui s'engage dans le logement 27 de l'embout 26 une tête 29, réunie à un corps 30, situé en arrière de cette tête, par un élément de liaison 31 de plus faible section, ménageant entre la tête et le corps de chaque côté du pion des évidements latéraux 32 symétriques l'un de l'autre. Enfin, la tête 29 comporte avantageusement des creux 33 de chaque côté de celle-ci, dont la profondeur est notablement inférieure à celle des évidements 32.

La mise en place de la pièce d'arrêt 17 dans la gorge 16 de la rainure associée s'effectue de façon très simple, comme il ressort en particulier des Figures 5 à 7 du dessin annexé.

Lors de la première phase de ce montage, la pièce 17 a son corps 19 et le pion 28 disposés relativement l'un par rapport à l'autre, comme représenté sur la Figure 5, la tête 29 du pion engagé dans le logement 27 de l'embout 26 affleurant à peine à l'extrémité de ce dernier. Les bras 22 et 23, dont la nature (matière plastique identique à celle du corps 19) et les dimensions leur confèrent une certaine flexibilité, peuvent donc être légèrement fléchis l'un vers l'autre pour s'engager dans la gorge 16 de la rainure 14, la pénétration des bras dans cette gorge étant facilitée grâce à une zone en pente 34, avantageusement prévue dans les parties externes de ces bras, au-delà de leur talon 24.

La pièce 17 peut ainsi venir s'engager à l'intérieur de la gorge à la manière d'un clip, l'élasticité des bras 22 et 23 leur permettant, après franchissement de la gorge par les talons 24 à l'extrémité des zones en pente 34, de s'écarter légèrement vers l'extérieur de telle sorte que ces talons puissent se loger derrière le profilé 12, en même temps d'ailleurs que le rebord 21 du corps 19 s'appuie contre la face opposée de ce profilé à l'extérieur de la gorge 16, les dimensions relatives du rebord et des bras, en particulier de l'endroit où sont ménagés sur ceux-ci les talons étant déterminées par construction en fonction de l'épaisseur du profilé 12 sur lequel s'adapte la pièce 17..

La seconde phase du montage consiste alors à exercer sur le pion coulissant 28 un effort de poussée, de telle sorte qu'il s'engage progressivement dans le logement 27 jusqu'au moment où la tête 29 de ce pion vient au contact des ailes 25 des bras 22 et 23. La tête 29 comportant avantageusement une partie frontale 35 légèrement biseautée, la poursuite du déplacement du pion 28 force légèrement vers l'extérieur les ailes 25 jusqu'au moment où les extrémités de celles-ci peuvent venir s'engager dans les creux 33 de la tête qui les immobilisent, en maintenant en conséquence la pièce 17 fermement solidarisée du profilé 12. Comme précédemment, les dimensions du pion 28 et des parties des bras 22, 23, s'étendant à partir du corps 19 sont déterminés par construction de telle sorte que, lorsque les ailes 25 s'engagent dans les creux 33 de la tête 29 comme exposé ci-dessus, la partie arrière du corps 30 du pion affleure exactement dans le plan du fond 20 et en particulier ne fasse pas saillie vers l'extérieur du corps 19 de façon à éviter une manipulation intempestive sur le pion qui reste ainsi entièrement effacé à l'intérieur du contour apparent de la pièce 17 dans la partie de celle-ci qui est seule accessible par l'extérieur du vantail. (Voir Figure 6).

Lorsqu'en revanche on souhaite pouvoir enlever la pièce d'arrêt 17, notamment pour démonter le vantail afin de procéder à une réparation ou à un entretien sur celui-ci, il suffit, comme représenté sur la Figure 7, d'exercer sur le pion 28 un effort de poussée complémentaire de telle sorte que les ailes 25 échappent alors au creux 33 de la tête 29 et viennent finalement pénètrer dans les évidements 32. Dans ces conditions, les ailes 25 et par suite les bras 22 et 23 ne sont plus bloqués par le pion, un effort d'extraction du corps 19 permettant aux talons 24 de se dégager de la gorge 16, la pièce 17 pouvant être alors retirée dans son ensemble pour accéder à la rainure 14. Avantageusement, le logement 27 comporte un épaulement interne 36 contre lequel s'appuie une portée 37 ménagée dans le corps 30 du pion, afin de limiter la course de ce dernier dans le logement de l'embout 26 et éviter notamment qu'il ne s'échappe à l'intérieur de la rainure lorsque la pièce 17 est en place et que s'exerce sur le pion l'effort de poussée précité.

On réalise ainsi un dispositif de conception très simple qui présente de nombreux avantages vis-à-vis des réalisations antérieures connues dans la technique, notamment en adoptant un mécanisme à clip pour la fixation de la pièce sur le profilé au droit de la gorge de la rainure à obturer partiellement, tout en conférant à cette pièce une capacité de blocage sûre lorsqu'elle est mise en place, sans pour autant interdire ultérieurement son enlèvement qui peut également être réalisé de façon très facile.

Le dispositif selon l'invention assure une réduction sensible des coûts nécessaires pour la mise en place de la pièce d'arrêt. Il procure une tenue garantie de cette pièce lors des manoeuvres ou manipulation du châssis ou de ses vantaux, avec une large possibilité de réutilisation de la pièce après démontage, celui-ci pouvant être effectué sans aucune dégradation des parties qui la constituent. En outre, le dispositif assure une grande sécurité vis-à-vis de toute tentative d'effraction, les pièces d'arrêt montées sur les côtés latéraux des vantaux du châssis se dissimulant dans la feuillure interne de ce dernier les recevant, en particulier lorsque la porte ou fenêtre est fermée, ce qui contribue à limiter les possibilités de soulèvement de ces vantaux pour leur déboîtement.

## Revendications

1. Vantail coulissant, notamment de porte, fenêtre ou analogue comportant un dispositif anti-déchaussement, ledit vantail (7, 8) étant monté dans un châssis de support fixe (2) et comportant un encadrement formé de profilés (10, 11, 12, 13) comprenant des rainures (14, 15) pour l'engagement de rails (5, 6) solidaires du chassis (2), sur lesquels coulisse le vantail, caractérisé en ce que le dispositif anti-dechaussement est constitue par une pièce de support (17), munie de deux bras parallèles et symétriques (22, 23) présentant une élasticité en flexion vis-à-vis de la pièce et propres à pénétrer à l'intérieur de la gorge (16) d'une (14) des rainures ménagée dans un profilé du vantail, prévue pour recevoir un des rails de guidage (5) de celui-ci solidarisé du châssis, de manière à engager un talon de blocage (24 ) en saillie vers l'extérieur et porté par chaque bras derrière le bord du profilé à la manière d'un clip, la pièce de support comportant entre ses bras un embout (26) muni d'un logement axial (27) pour le montage d'un pion (28) coulissant dans ce logement, ce pion étant terminé par une tête (29) formant poussoir d'immobilisation de la pièce de support par appui de cette tête, à l'extérieur de l'embout, sur des ailes (25) en retour vers l'intérieur de la gorge, portées par les bras de cette pièce à l'opposé des talons de blocage.

2. Vantail coulissant selon la revendication 1, caractérisé en ce que la pièce de support (17) est réalisée par moulage d'un matériau plastique, les bras flexibles (22, 23) étant venus de fabrication avec la pièce.

3. Vantail coulissant selon l'une des revendications 1 ou 2, caractérisé en ce que la tête (29) du pion (28) comporte des creux en regard (33), aptes à recevoir les extrémités des ailes (25) des bras (22, 23) en position d'immobilisation des talons de blocage (24).

4. Vantail coulissant selon l'une quelconque des revendications 1 à 3, caractérisé en ce que les ailes (25) des bras flexibles (22, 23) comportent des zones en pente (34) pour faciliter l'engagement des bras dans la gorge (16) de la rainure.

5. Vantail coulissant selon l'une quelconque des revendications 1 à 4, caractérisé en ce que le pion coulissant (28) comprend, en arrière de sa tête (29) et en regard de chacun des bras (22, 23), des évidements médians (32) tel qu'un effort de poussée complémentaire sur le pion dans son logement (27), fasse échapper la tête vis-à-vis des ailes latérales, en provoquant leur engagement dans l'évidement correspondant, de manière à libérer les talons de blocage (24) et à autoriser l'enlèvement de la pièce de support (17).

6. Vantail coulissant selon la revendication 5, caractérisé en ce que le pion coulissant (28) comporte une portée (37), apte à venir en appui contre un épaulement interne (36) de fin de course prévu dans le logement (27) de l'embout (26), notamment lorsque les ailes latérales (25) s'engagent dans les évidements médians (32) pour libérer les talons de blocage (24) des bras (22, 23).

7. Vantail coulissant selon l'une quelconque des revendications 1 à 6, caractérisé en ce que la pièce de support (17) comporte un corps (20) à section sensiblement rectangulaire, présentant latéralement une échancrure (18) pour le passage du rail (5, 6) de guidage du vantail (7, 8) et un rebord d'appui (21) sur le profilé recevant les bras (22, 23), l'embout (26) muni de son logement axial (27) étant disposé sous le bord inférieur de cette échancrure dans le plan médian dudit rail.

## Claims

1. Sliding leaf, especially of a door, window or the like, including an anti-derailment device, said leaf (7, 8) being mounted in a stationary supporting chassis (2) and including a frame formed of profile sections (10, 11, 12, 13) including slots (14, 15) for engaging rails (5, 6) integral with the chassis (2), on which rails the leaf slides, characterized in that the anti-derailment device consists of a support component (17) equipped with two parallel and symmetrical arms (22, 23) exhibiting elasticity in bending with respect to the component and capable of penetrating inside the groove (16) of one (14) of the slots which is made in one profile section of the leaf, designed to accommodate one of the rails (5) for guiding the latter which is integral with the chassis, so as to engage a locking spur (24) projecting outwards and borne by each arm behind the edge of the profile section in the manner of a clip, the support component including, between its arms, an end piece (26) equipped with an axial housing (27) for the fitting of a peg (28) sliding in this housing, this peg ending in a head (29) forming a push-rod for immobilizing the support component by the bearing of this head, on the outside of the end piece, on flanges (25) turned back towards the inside of the groove and borne by the arms of this component at the opposite end to the locking spurs.

2. Sliding leaf according to Claim 1, characterized in that the support component (17) is made by moulding a plastic, the flexible arms (22, 23) being formed integrally with the said component at the time of manufacture.

3. Sliding leaf according to one of Claims 1 and 2, characterized in that the head (29) of the sliding peg (28) includes hollows (33) opposite each other, designed to accommodate the ends of the flanges (25) of the arms (22, 23) in the position of immobilization of the locking spurs (24).

4. Sliding leaf according to any one of Claims 1 to 3, characterized in that the flanges (25) of the flexible arms (22, 23) include sloping regions (34) for facilitating the engagement of the arms in the groove (16) of the slot.

5. Sliding leaf according to any one of Claims 1 to 4, characterized in that the sliding peg (28) comprises, to the rear of its head (29) and facing each of the arms (22, 23), median recesses (32) such that a complementary thrusting force on the peg in its housing (27) causes the head to escape from the lateral flanges, making them engage in the corresponding recess so as to release the locking spurs (24) and allow the support component (17) to be removed.

6. Sliding leaf according to Claim 5, characterized in that the sliding peg (28) includes a bearing surface (37) designed to come to bear against an internal end-of-travel shoulder (36) provided in the housing (27) of the end piece (26), especially when the lateral flanges (25) engage in the median recesses (32) in order to release the locking spurs (24) of the arms (22, 23).

7. Sliding leaf according to any one of Claims 1 to 6, characterized in that the support component (17) includes a body (20) with substantially rectangular cross-section laterally exhibiting a notch (18) for the passage of the rail (5, 6) for guiding the leaf (7, 8) and a bearing rim (21) on the profile section accommodating the arms (22, 23), the end piece (26) equipped with its axial housing (27) being located under the lower edge of this notch in the mid-plane of the said rail.

## Patentansprüche

1. Schiebeflügel, insbesondere Tür, Fenster oder analoges Teil, der eine Anti-Aushebevorrichtung aufweist, wobei der Flügel (7, 8) in einem feststehenden Tragrahmen (2) montiert ist und eine Umrahmung aus Profilelementen (10, 11, 12, 13) umfaßt, die Nuten (14, 15) zum Umfassen von Schienen (5, 6) aufweisen, die mit dem Tragrahmen (2) fest verbunden sind und auf denen der Flügel gleitet,
dadurch **gekennzeichnet,** daß die Anti-Aushebevorrichtung aus einem Halterungsteil (17) besteht, das mit zwei parallelen und symmetrischen Armen (22, 23) versehen ist, die eine Biegeelastizität gegenüber dem Halterungsteil besitzen und fähig sind, in das Innere der Vertiefung (16) einer (14) der Nuten einzudringen, welche in ein Profilelement des Flügels eingearbeitet ist und zum Aufnehmen einer der Führungsschienen (5) des Flügels vorgesehen ist, die mit dem Tragrahmen fest verbunden ist, derart, daß eine nach außen hin vorstehende Sperrnase (24) gefaßt und von jedem Arm hinter die Kante des Profilelementes nach Art eines Klips gebracht wird, wobei das Halterungsteil zwischen seinen Armen einen Ansatz (26) aufweist, der mit einem axialen Aufnahmelager (27) für die Anbringung eines Stiftes (28) versehen ist, welcher in diesem Aufnahmelager gleitet, wobei der Stift in einem Kopf (29) endet, der einen Knopf zum Blockieren des Halterungsteils durch Abstützen des Kopfes außerhalb des Ansatzes auf Flügeln (25) bildet, die zum Inneren der Vertiefung hin abgewinkelt sind und von den Armen des Halterungsteils gegenüber den Blockieransätzen getragen werden.

2. Schiebeflügel nach Anspruch 1,
dadurch **gekennzeichnet,** daß das Halterungsteil (17) durch Formen eines plastischen Materials hergestellt ist, wobei die flexiblen Arme (22, 23) bei der Herstellung mit dem Halterungsteil zustandekommen.

3. Schiebeflügel nach Anspruch 1 oder 2,
dadurch **gekennzeichnet,** daß der Kopf (29) des Stiftes (28) einander gegenüberliegende Ausnehmungen (33) aufweist, die zum Aufnehmen der Enden der Flügel (25) der Arme (22, 23) in der Blockierposition der Sperrnasen (24) befähigt sind.

4. Schiebeflügel nach einem beliebigen Anspruch 1 bis 3,
dadurch **gekennzeichnet,** daß die Flügel (25) der flexiblen Arme (22, 23) abgeschrägte Zonen (34) aufweisen, um das Fassen der Arme in der Vertiefung (16) der Nut zu erleichtern.

5. Schiebeflügel nach einem beliebigen Anspruch 1 bis 4,
dadurch **gekennzeichnet,** daß der Gleitstift (28) hinter seinem Kopf (29) und gegenüber jedem Arm (22, 23) mittlere Aussparungen (32) aufweist, derart, daß ein ergänzender Kraftstoß auf den in seinem Aufnahmelager (27) befindlichen Stift den Kopf gegenüber den seitlichen Flügeln entweichen läßt und deren Eingreifen in die entsprechende Aussparung hervorruft, derart, daß die Blockieransätze (24) freigelassen werden und die Fortnahme des Halterungsteils (17) ermöglicht wird.

6. Schiebeflügel nach Anspruch 5,
dadurch **gekennzeichnet,** daß der Gleitstift (28) eine Auflagefläche (37) aufweist, die geeignet ist, gegen eine im Aufnahmelager (27) des Ansatzes (26) vorgesehene innere Laufweg-Endschulter (36) in Anschlag zu kommen, insbesondere wenn die seitlichen Flügel (25) in die mittleren Aussparungen (32) eingreifen, um die Sperrnasen (24) der Arme (22, 23) freizugeben.

7. Schiebeflügel nach einem beliebigen Anspruch 1 bis 6,
dadurch **gekennzeichnet,** daß das Halterungsteil (17) einen Körper (20) mit im wesentlichen rechteckigem Querschnitt umfaßt, der seitlich einen Ausschnitt (18) für den Durchtritt der Führungsschiene (5, 6) des Schiebeflügels (7, 8) sowie einen Randsteg (21) auf dem die Arme (22, 23) aufnehmenden Profilelement aufweist, wobei der mit seinem axialen Aufnahmelager (27) versehene Ansatz (26) unter dem unteren Rand dieses Ausschnittes in der Mittelebene der genannten Schiene angeordnet ist.
